# EUROPEAN PATENT SPECIFICATION

(11) **EP 1 250 821 B1**
(45) Date of publication and mention of the grant of the patent: **02.01.2004**
(21) Application number: 01903828.0
(22) Date of filing: 29.01.2001
(51) Int. Cl.: H04Q 7/22

(54) **CHECKING THE STATUS OF A SUBSCRIBER IN A TELECOMMUNICATION SYSTEM**
STATUSPRÜFUNG EINES TEILNEHMERS IN EINEM TELEKOMMUNIKATIONSSYSTEM
VERIFICATION DU STATUT D'UN ABONNE DANS UN SYSTEME DE TELECOMMUNICATION

(30) Priority: 27.01.2000 FI 20000162
(43) Date of publication of application: 23.10.2002
(73) Proprietor: Sonera Oyj, 00510 Helsinki (FI)
(72) Inventor: LAHTINEN, Pasi, London, Greater London SW7 3QA (GB); ALA-LUUKKO, Sami, FIN-00200 Helsinki (FI)
(74) Representative: Simmelvuo, Markku
(86) International application number: PCT/FI2001/000080
(87) International publication number: WO 2001/056312

(56) References cited:
- EP-A2- 0 851 696
- WO-A1-97/41654
- WO-A2-98/32300

## Description

### FIELD OF THE INVENTION

The present invention relates to telecommunication systems. In particular, the invention relates to a method and a system for checking the validity of a subscription of a subscriber in a telecommunication system comprising a communication system, a short message service platform, a short message transmission server which is connected to the aforementioned short message service platform and to the aforementioned communication system, a home location register which comprises the validity of a subscription of the subscriber and belongs to the aforementioned communication system.

### BACKGROUND OF THE INVENTION

The advantage of a mobile communication network, e.g. a GSM system (GSM, Global System for Mobile communications) as compared with a public switched telephone network (PSTN, Public Switched Telephone Network) is the mobility management. In this application, a mobile communication network is advantageously used to mean a digital mobile network. The mobile communication network enables one to make and receive phone calls anywhere in the coverage area of the network. Since the introduction of the digital mobile networks the services provided have included a short message service (SMS, Short Message Service). In the short message service, the mobile subscriber may send text messages that contain up to 160 characters from his or her terminal device to another subscriber who has got a terminal device capable of receiving short messages at his or her disposal. The technical specification of the short message service concerning the GSM system has been presented in the standard GTS GSM 03.40 V5.3.0 (1996-07) of ETSI (ETSI, European Telecommunications and Standard Institute).

At present, the problem is the fact of how to monitor the validity of a subscription of billing clients, especially of a foreign billing client. A foreign billing client is used to mean a client who has made a specific contract with the local operator in which, e.g. the billing mode of certain specific services is defined. Specific services is herein used to mean, e.g. specially priced short message services. In this application, the operator is used to mean, e.g. an entity which offers different mobile services.

The previously known solution for the monitoring of the validity of a subscription has been based on a cancellation based on the terms of a contract. One other known solution for the checking of the existence of a subscription is that from the subscription, a kind of an activating code is sent at certain intervals.

Additionally prior art includes EP-A-0851696 which discloses a method of wireless retrieval of information in which a mobile station subscriber can access data from an informational database and have it forwarded to a desired destination. A database associated with the informational database maintains subscriber profiles. When the informational database receives a data request, it uses a mobile station identifier to acquire subscriber profile information. Using that profile information, the requested data is forwarded to a destination designated in the profile in a SMS format.

The general problem with the known methods is, however, the fact that they include credit risks and that they are not automatic. In addition, the previous solutions usually include a plenty of different contracts between different operators.

### OBJECTIVE OF THE INVENTION

The objective of the invention is to eliminate the drawbacks referred to above or at least significantly to alleviate them. One specific objective of the present invention is to disclose a method and a system which enable one to monitor the status of a subscription, especially the validity of it.

### BRIEF DESCRIPTION OF THE INVENTION

The system in accordance with the invention relates to the checking of the validity of a subscription of a subscriber in a telecommunication system. The checking of the validity of a subscription of a subscriber is arranged in such a way that the validity of a subscription of the subscriber is checked in conjunction with the transmission of a short message or at a separately defined point of time as a separate event.

The telecommunication system in accordance with the invention comprises a communication system, a short message service platform, a short message transmission server which is connected to the aforementioned short message service platform and to the aforementioned communication system. In addition, the system comprises a home location register which comprises the validity of a subscription of the subscriber and belongs to the aforementioned communication system.

According to the invention, in the short message service platform, a database is maintained that comprises the validity of a subscription of the service subscriber. The validity of a subscription of the subscriber is herein used to mean, e.g. that the subscriber exists in the database of the operator and that the subscriber may receive, e.g. short messages and calls. A query is sent to the home location register about the validity of a subscription of the subscriber. The query is made, e . g. by the short message transmission server. In such a case, the short message transmission server comprises an interface via which it can communicate with the home location register.

The query may be made to the home location register at a predetermined point of time. This query is made in order to find out whether the subscriber still exists. In this kind of a query, the subscriber is not delivered a short message connected with any service at all. The query may, in addition, be sent in response to the functioning of the service. This is supposed to mean that the query is made at the same time when the subscriber is delivered a short message in accordance with the short message service ordered by him or her.

The database of the short message service platform is updated based on the aforementioned piece of information included in the home location register. If, according to the piece of information included in the home location register, the subscriber does no longer exist, the entry of the subscriber may be deleted from the database, or the subscriber may be entered as blocked. The functions of the short message transmission server may be implemented as a part of the short message service centre of a mobile communication network.

The system in accordance with the invention comprises a database which comprises information about the validity of subscriptions of service subscribers for sending a first status query concerning a transmission unit subscriber to the home location register; a checking unit which is used to check in the home location register the aforementioned piece of information in accordance with the aforementioned query that describes the validity of subscriptions of the service subscribers; a second transmission unit which is used to return the aforementioned piece of information to the short message service platform and a recorder for updating the database of the short message service platform based on the aforementioned piece of information included in the home location register.

In an embodiment of the invention, the system comprises a timer for timing the transmission moment.

In an embodiment of the invention, the communication system is a mobile communication network.

In an embodiment of the invention, the functions of the short message transmission server have been implemented in the short message service centre of a mobile communication network.

The present invention enables one to automatically monitor, e.g. the validity of a subscription of a foreign billing client. The invention may be used also to check the existence of domestic clients. Further, the invention reduces the credit risk and helps to reduce the number of contracts between operators.

### BRIEF DESCRIPTION OF THE DRAWINGS

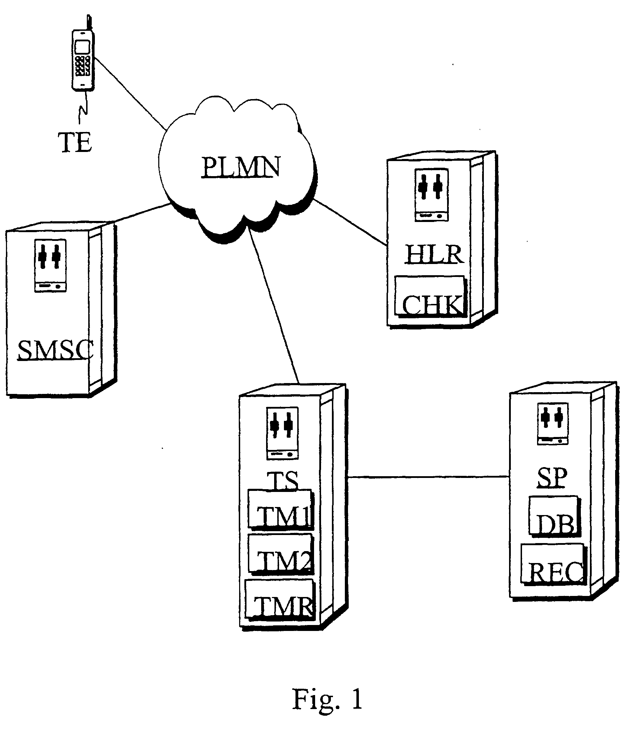

In the following section, the invention will be described in detail by the aid of a few examples of its embodiments, in which
Fig. 1 represents one advantageous system in accordance with the invention,
Fig. 2a is an advantageous signaling flow chart illustrating the function of the present invention,
Fig. 2b is an advantageous signaling flow chart illustrating the function of the present invention.

### DETAILED DESCRIPTION OF THE INVENTION

The system in accordance with the invention comprises a communication system PLMN, which in this example is a mobile communication network. Connected to the mobile communication network PLMN is the mobile station TE, e.g. via a radio interface. Connected to the mobile communication network PLMN is the short message service centre SMSC (SMSC, Short Message Service Center), home location register HLR (HLR, Home Location Register) and the short message transmission server TS. The tasks of the short message transmission server TS include making a request to the home location register HLR that concerns the status of a subscriber connected with the mobile station TE. The functions of the short message transmission server TS may be implemented also as a part of the operation of the short message service centre SMSC. Connected to the short message transmission server TS is the short message service platform SP, which is responsible for producing and transmitting different short message services.

The short message transmission server comprises a first transmission unit TM1 for sending a query to the home location register HLR, which query concerns information that describes the status of service subscribers. The second transmission unit TM2 may be used to return the aforementioned piece of information received from the home location register HLR to the short message service platform SP. The timer TMR is used to time the transmission moment of the status query. The first transmission unit TM1, the second transmission unit TM2 and the timer TMR are implemented, e.g. by program blocks by the aid of the computer or in a way known in itself and are therefore not described in more detail.

The short message service platform SP comprises a database DB which comprises the status of the service subscribers. The recorder REC is used to update the database of the short message service platform SP based on the aforementioned piece of information included in the home location register HLR. The recorder REC and the database DB are implemented by program blocks by the aid of the computer or in a way known in itself and are therefore not described in more detail.

The home location register HLR comprises a checking unit CHK which is used to check the aforementioned piece of information in accordance with the aforementioned query that describes the status of service subscribers. The checking unit CHK is implemented by program blocks by the aid of the computer or in a way known in itself and is therefore not described in more detail.

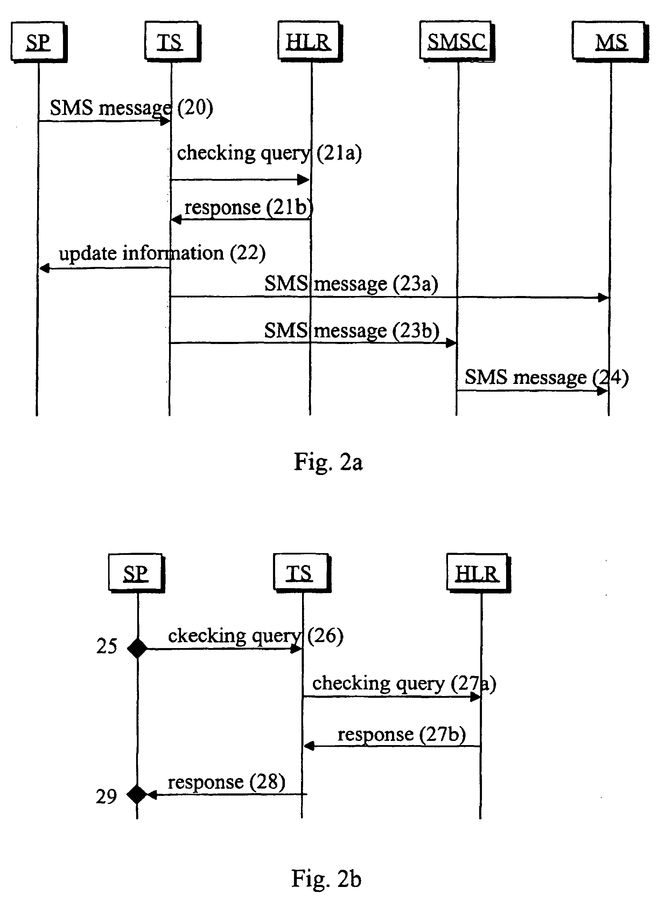

Fig. 2a is one advantageous signaling diagram illustrating the function of the present invention. The example as shown in Fig. 2a comprises a short message service platform SP, a short message transmission server TS, a home location register HLR, a short message service centre SMSC of a mobile communication network and a mobile station MS.

In the example as shown in Fig. 2a the client has made a contract with the operator based on which the client receives into his or her mobile phone lotto numbers in a short message form every Saturday at 21.30. The short message service platform SP retrieves the lotto numbers and creates a short message which comprises the retrieved numbers. The eventual receiver of the short message is the client who has ordered the lotto numbers. The actual statuses of the service subscribers have been saved to the database located in the short message service platform SP. The created short message is delivered to the short message transmission server TS, arrow 20. The short message transmission server TS makes a check query to the home,location register HLR in order to ask whether the subscriber marked as the receiver of the short message exists, arrow 21a. As shown by arrow 21b, the home location register HLR returns a response to the query made by the short message transmission server TS. If the subscriber can be reached, the short message transmission server TS sends a short message to the mobile station MS of the receiver, arrow 23a. Alternatively, if the subscriber cannot be reached, the short message may be transmitted further to the short message service centre SMSC, arrow 23b. From there it may be transmitted to the mobile station MS, when it is possible to transmit short messages again, arrow 24. If the check query sent to the home location register HLR shows that the client does no longer exist, then the short message transmission server TS sends a piece of update data about the status of the client to the short message service platform SP, arrow 22. The short message service platform SP updates its database based on the received information. The invoicing of specially priced short message services may be arranged, e.g. as a credit card bill.

In an embodiment as shown in Fig. 2a, the functions of the short message transmission server TS have been implemented in the short message service centre SMSC of the mobile communication network.

Fig. 2b is one advantageous signaling diagram illustrating the function of the present invention. The example as shown in Fig. 2b comprises a short message service platform SP, a short message transmission server TS and a home location register HLR.

In the example as shown in Fig. 2b, several different clients may have made a contract with the operator about the use of specially priced short message services. The operator is used to mean an entity which acts, e.g. as the maintainer of the mobile communication network and through which it is possible to order and use different services, e.g. short message services. In the example as shown in Fig. 2b, the actual short message is, however, not sent at all, instead only the query concerning the status of the subscribers.

The short message service platform SP comprises a timer which is set to function so that at certain intervals, it gives a command to check in the home location register HLR the existence of the subscribers who have ordered specially priced short message services. The checking is done, e.g. for such subscribers to whom there are no short messages delivered in the last 24 hours. The rhomb 25 describes the above-mentioned functionality. The short message service platform SP sends a check query to the short message transmission server TS, arrow 26.

The short message transmission server TS makes a check query further to the home location register HLR. The check query is made in order to inquire whether a certain subscriber or certain subscribers exist, arrow 27a. The home location register HLR responses to the query based on the information included in it, arrow 27b. The short message transmission server TS sends the response received by it from the home location register HLR to the short message service platform SP, arrow 28. The rhomb 29 describes the fact that the database of the service platform is being updated based on the received information to correspond to the actual situation. If the home location register HLR notifies that a certain subscriber or certain subscribers do no longer exist, then the subscriber is eliminated from the database of the service platform, or the subscriber is entered as blocked. The operator invoices the subscriber for the used short message services, e.g. by a credit card bill.

The invention is not restricted merely to examples of its embodiments referred to above, instead many variations are possible within the scope of the inventive idea defined by the claims.

## Claims

1. A method for the checking of the validity of a subscription of a subscriber in a telecommunication system comprising:
a communication system (PLMN);
a short message service platform (SP);
a short message transmission server (TS) which is connected to the aforementioned short message service platform (SP) and to the aforementioned communication system (PLMN);
a home location register (HLR) which comprises information about validity of a subscription of a service subscriber and which belongs to the aforementioned communication system (PLMN);
**characterised in that** the method comprises the steps of:
maintaining a database (DB) in the short message service platform (SP) that contains information about validity of subscriptions of service subscribers;
sending a query about the aforementioned piece of information that describes the validity of subscriptions of service subscribers from the short message transmission server (TS) to the home location register (HLR);
checking in the home location register (HLR), based on the aforementioned query, the aforementioned piece of information that describes the validity of a subscription of a service subscriber;
returning the aforementioned piece of information to the short message service platform (SP); and
updating the database (DB) of the short message service platform (SP) based on the aforementioned piece of information included in the home location register (HLR).

2. A method as defined in claim 1, **characterised in that** the subscriber is eliminated from the database (DB) of the short message service platform (SP) or the subscriber is entered as blocked, if the subscriber, based on the aforementioned piece of information included in the home location register (HLR), does no longer exist.

3. A method as defined in claim 1 or 2, **characterised in that** the aforementioned query is sent at a predetermined point of time.

4. A method as defined in claim 1 or 2, **characterised in that** the aforementioned query is sent in response to functioning of the service.

5. A method as defined in any one of the preceding claims 1, 2 , 3 or 4, **characterised in that** the functions of the short message transmission server (TS) are implemented in the short message service centre of the mobile communication network.

6. A system for checking the validity of a subscription of a subscriber in a telecommunication system comprising:
a communication system (PLMN);
a short message service platform (SP);
a short message transmission server (TS) which is connected to the aforementioned short message service platform (SP) and to the aforementioned communication system (PLMN);
a home location register (HLR) which comprises information about validity of a subscription of a service subscriber and which belongs to the aforementioned communication system (PLMN);
**characterised in that** the method comprises
a database (DB) which contains information about validity of subscriptions of service subscribers;
a first transmission unit (TM1) included in the short message transmission server (TS) for sending a query to the home location register (HLR), which query concerns the piece of information describing the validity of subscriptions of service subscribers;
a checking unit (CHK) which is used to check in the home location register (HLR) the aforementioned piece of information in accordance with the aforementioned query that describes the validity of subscriptions of service subscribers;
a second transmission unit (TM2) included in the short message transmission server (TS) which is used to return the aforementioned piece of information to the short message service platform (SP); and
a recorder (REC) for updating the database (DB) of the short message service platform (SP) based on the aforementioned piece of information included in the home location register (HLR).

7. A system as defined in claim 6, **characterised in that** the system comprises a timer (TMR) for timing the transmission moment of the status query.

8. A system as defined in claim 6 or 7, **characterised in that** the communication system (PLMN) is a mobile communication network.

9. A system as defined in any one of the preceding claims 6, 7 or 8, **characterised in that** the functions of the short message transmission server (TS) have been implemented in the short message service centre of the mobile communication network.

## Patentansprüche

1. Verfahren zum Prüfen der Gültigkeit eines Abonnements eines Teilnehmers in einem Telekommunikationssystem, umfassend:
ein Kommunikationssystem (PLMN);
eine im folgenden als SMS-Platform (SP) bezeichnete Kurznachrichtendienst-Plattform;
einen Kurznachrichten-Übertragungsserver (TS), der an die SMS-Plattform (SP) und an das erwähnte Kommunikationssystem (PLMN) angeschlossen ist;
ein Heimatregister (HLR), welches Information über die Gültigkeit eines Abonnements eines Dienstteilnehmers enthält, und das zu dem erwähnten Kommunikationssystem (PLMN) gehört,
**dadurch gekennzeichnet, dass** das Verfahren folgende Schritte aufweist:
Führen einer Datenbank (DB) der SMS-Plattform (SP), welche Information über die Gültigkeit von Abonnements von Dienstteitnehmern enthält;
Senden einer Anfrage über das erwähnte Informationsstück, welches die Gültigkeit von Abonnements von Dienstteilnehmern beschreibt, von dem Kurznachrichten-Übertragungsserver (DS) zu dem Heimatregister (ALR);
basierend auf der genannten Anfrage, Überprüfen des Informationsstücks, welches die Gültigkeit eines Abonnements eines Dienstteilnehmers beschreibt, in dem Heimatregister (HLR);
Zurückgeben des erwähnten Informationsstücks an die SMS-Plattform (SP); und
Aktualisieren der Datenbank (DB) der SMS-Plattform (SP) basierend auf dem genannten Informationsstück, das in dem Heimatregister (HLR) enthalten ist.

2. Verfahren nach Anspruch 1, **dadurch gekennzeichnet, dass** der Teilnehmer aus der Datenbank (DB) der SMS-Plattform (SP) gestrichen oder der Teilnehmer als gesperrt vermerkt wird, wenn der Teilnehmer entsprechend dem erwähnten Informationsstück, das in dem Heimatregister (HLR) enthalten ist, nicht mehr existiert.

3. Verfahren nach Anspruch 1 oder 2, **dadurch gekennzeichnet, dass** die erwähnte Anfrage zu einem vorbestimmten Zeitpunkt gesendet wird.

4. Verfahren nach Anspruch 1 oder 2, **dadurch gekennzeichnet, dass** die genannten Anfrage ansprechend auf den Dienstablauf gesendet wird.

5. Verfahren nach einem der vorhergehenden Ansprüche 1, 2, 3 oder 4, **dadurch gekennzeichnet, dass** die Funktionen des Kurznachrichten-Übertragungsservers (TS) in dem SMS-Zentrum des mobilen Kommunikationsnetzwerks implementiert sind.

6. System zum Prüfen der Gültigkeit eines Abonnements eines Teilnehmers in einem Telekommunikationssystem, umfassend:
ein Kommunikationssystem (PLMN);
eine im folgenden als SMS-Platform (SP) bezeichnete Kurznachrichtendienst-Plattform;
einen Kurznachrichten-Übertragungsserver (TS), der an die SMS-Plattform (SP) und an das erwähnte Kommunikationssystem (PLMN) angeschlossen ist;
ein Heimatregister (HLR), welches Information über die Gültigkeit eines Abonnements eines Dienstteilnehmers enthält, und das zu dem erwähnten Kommunikationssystem (PLMN) gehört,
**gekennzeichnet durch**:
eine Datenbank (DB), die Informationen über die Gültigkeit von Abonnements von Dienstteilnehmern enthält;
eine erste Übertragungseinheit (TM1) in dem Kurznachrichten-Übertragungsserver (TS) zum Senden einer Anfrage an das Heimatregister (HLR), welche Anfrage das Informationsstück betrifft, welches die Gültigkeit von Abonnements von Dienstteilnehmern beschreibt;
eine Prüfeinheit (CHK), die dazu benutzt wird, in dem Heimatregister, (HLR) das Informationsstück, welches die Gültigkeit von Abonnements von Dienstteilnehmern beschreibt, entsprechend der erwähnten Anfrage zu prüfen;
eine zweite Übertragungseinheit (TM2), die in dem Kurznachrichten-Übertragungsserver (TS) enthalten ist und dazu dient, das erwähnte Informationsstück an die SMS-Plattform (SP) zurückzugeben; und
einen Rekorder (REC) zum Aktualisieren der Datenbank (DB) der SMS-Plattform (SP) basierend auf dem in dem Heimatregister (HLR) enthaltenen Informationsstück.

7. System nach Anspruch 6, **dadurch gekennzeichnet, dass** es einen Timer (TMR) zur zeitlichen Steuerung des Übertragungszeitpunkts der Statusanfrage enthält.

8. System nach Anspruch 6 oder 7, **dadurch gekennzeichnet, dass** das Kommunikationssystem (PLMN) ein mobiles Kommunikationsnetzwerk ist.

9. System nach einem der vorhergehenden Ansprüche 6, 7 oder 8, **dadurch gekennzeichnet, dass** die Funktionen des Kurznachrichten-Übertragungsservers (TS) in dem SMS-Zentrum des mobilen Kommunikationsnetzwerks implementiert worden sind.

## Revendications

1. Procédé pour la vérification de la validité de l'abonnement d'un abonné dans un système de télécommunication comprenant :
un système de communication (RTMP - Réseau terrestre mobile public) ;
une plate-forme de service de messages courts (PS) ;
un serveur de transmission de messages courts (ST) qui est connecté à la plate-forme de service de messages courts (PS) susmentionnée et au système de communication (RTMP) susmentionné ;
un enregistreur de localisation nominal (ELN) qui comprend des informations sur la validité d'un abonnement d'un abonné à un service et qui appartient au système de communication (RTMP) susmentionné ;
**caractérisé en ce que** le procédé comprend les étapes consistant à :
assurer la mise à jour d'une base de données (BD) dans la plate-forme de messages courts (PS) qui contient des informations sur la validité des abonnements des abonnés à un service ;
envoyer une requête concernant l'élément d'information susmentionné qui décrit la validité des abonnements des abonnés au service à partir du serveur de transmission de messages courts (ST) vers l'enregistreur de localisation nominal (ELN) ;
vérifier dans l'enregistreur de localisation nominal (ELN), en se basant sur la requête susmentionnée, l'élément d'information susmentionné qui décrit la validité d'un abonnement d'un abonné à un service ;
retourner l'élément d'information susmentionné à la plate-forme de service de messages courts (PS) ; et
mettre à jour la base de données (BD) de la plate-forme de service de messages courts (PS) en se basant sur l'élément d'information susmentionné inclus dans l'enregistreur de localisation nominal (ELN).

2. Procédé tel que défini dans la revendication 1, **caractérisé en ce que** l'abonné est éliminé de la base de données (BD) de la plate-forme de service de messages courts (PS) ou **en ce que** l'abonné est entré comme étant bloqué, si l'abonné, en se basant sur l'élément d'information susmentionné inclus dans l'enregistreur de localisation nominal (ELN), n'existe plus.

3. Procédé tel que défini dans les revendications 1 ou 2, **caractérisé en ce que** la requête susmentionnée est envoyée à un instant prédéterminé.

4. Procédé tel que défini dans les revendications 1 ou 2, **caractérisé en ce que** la requête susmentionnée est envoyée en réponse au fonctionnement du service.

5. Procédé tel que défini dans l'une quelconque des revendications 1, 2, 3 ou 4 précédentes, **caractérisé en ce que** les fonctions du serveur de transmission de messages courts (ST) sont implémentées dans le centre de service de messages courts du réseau de communication mobile.

6. Système pour vérifier la validité d'un abonnement d'un abonné dans un système de télécommunication comprenant :
un système de communication (RTMP) ;
une plate-forme de service de messages courts (PS) ;
un serveur de transmission de messages courts (ST) qui est connecté à la plate-forme de service de messages courts (PS) susmentionnée et au système de communication (RTMP) susmentionné ;
un enregistreur de localisation nominal (ELN) qui comprend des informations sur la validité d'un abonnement d'un abonné à un service et qui appartient au système de communication (RTMP) susmentionné ;
**caractérisé en ce que** le procédé comprend :
une base de données (BD) qui contient des informations concernant la validité des abonnements des abonnés à un service ;
une première unité de transmission (TM1), comprise dans le serveur de transmission de messages courts, pour envoyer une requête à l'enregistreur de localisation nominal (ELN), laquelle requête concerne l'élément d'information décrivant la validité des abonnements des abonnés à un service ;
une unité de vérification (CHK) qui est utilisée pour vérifier, dans l'enregistreur de localisation nominal (ELN), l'élément d'information susmentionné en accord avec la requête susmentionnée qui décrit la validité des abonnements des abonnés à un service ;
une seconde unité de transmission (TM2), comprise dans le serveur de transmission de messages courts, qui est utilisée pour retourner l'élément d'information susmentionné à la plate-forme de service de messages courts (PS) ; et
un enregistreur (REC) pour mettre à jour la base de données de la plate-forme de service de messages courts (PS) en se basant sur l'élément d'information susmentionné inclus dans l'enregistreur de localisation nominal (ELN).

7. Système tel que défini dans la revendication 6, **caractérisé en ce que** le système comprend un minuteur (TMR) pour minuter le moment de transmission de la requête d'état.

8. Système tel que défini dans les revendications 6 ou 7, **caractérisé en ce que** le système de communication (RTMP) est un réseau de communication mobile.

9. Système tel que défini dans l'une quelconque des revendications 6, 7 ou 8 précédentes, **caractérisé en ce que** les fonctions du serveur de transmission de messages courts (ST) a été implémenté dans le centre de service de messages courts du réseau de communication mobile.
